# FASCICULE DE BREVET EUROPEEN

(11) **EP 2 208 895 B1**
(45) Date de publication et mention de la délivrance du brevet: **23.05.2012**
(21) Numéro de dépôt: 10305023.3
(22) Date de dépôt: 11.01.2010
(51) Int. Cl.: F16B 7/04, F16B 12/12, F16B 12/24

(54) **Assemblage tenon-mortaise avec cheville**
Nutzapfenverbindung mit Stift
Mortise and tenon joint with pin

(30) Priorité: 12.01.2009 FR 0950124
(43) Date de publication de la demande: 21.07.2010
(73) Titulaire: Sauthon Industries, 23000 Guéret (FR)
(72) Inventeur: Gaudier, Philippe, 23140, PIONNAT (FR)
(74) Mandataire: Laget, Jean-Loup

(56) Documents cités:
- DE-A1- 3 619 571
- US-A- 1 569 136
- US-A- 3 118 543

## Description

### Domaine technique de l'invention

La présente invention se rapporte à un dispositif comprenant deux pièces assemblées par tenon-mortaise suivant la revendication 1. En particulier, la présente invention se rapporte au mobilier en bois assemblé par tenon-mortaise.

### Etat de la technique

Dans le domaine de la menuiserie et plus précisément du mobilier en bois, il est courant d'assembler des pièces par un assemblage tenon-mortaise.

Le plus simple de ces assemblages consiste simplement à insérer le tenon dans la mortaise. L'efficacité de la fixation est toutefois limitée.

Pour améliorer l'efficacité de la fixation, il est connu de coller l'assemblage. Cependant, la mise en oeuvre industrielle d'un procédé d'encollage est délicate et ne garantit pas, de façon visible, et dans 100 % des utilisations l'intégrité géométrique des sous ensembles ainsi constitués.

Une autre manière connue d'améliorer l'efficacité de la fixation est de percer, dans la pièce mortaisée, un orifice qui se prolonge à travers le tenon et d'y insérer une cheville. Cela nécessite une opération d'usinage après avoir inséré le tenon dans la mortaise. De plus, en cas de pièces laquées ou vernies, l'usinage d'un orifice peut endommager la laque ou le vernis. L'état de la technique est indiqué par US 1 569 136.

### Résumé de l'invention

Un problème que la présente invention propose de résoudre est de fournir un dispositif comprenant deux pièces assemblées par tenon-mortaise qui ne présente pas certains des inconvénients précités de l'art antérieur. En particulier, un but de l'invention est d'améliorer l'efficacité de la fixation sans nécessiter une opération d'encollage ni l'usinage d'un orifice après l'insertion du tenon dans la mortaise.

La solution proposée par l'invention est un dispositif comprenant une première pièce présentant une mortaise et une deuxième pièce présentant un tenon de forme correspondante à ladite mortaise et une cheville destinée à maintenir le tenon dans la mortaise, le tenon étant inséré dans ladite mortaise, dans lequel la première pièce présente un orifice en forme de cylindre de révolution qui communique avec ladite mortaise et dans lequel est insérée la cheville coopérant avec ledit tenon, la mortaise présentant au moins une paroi courbe, caractérisé par le fait que l'axe dudit orifice est tangent à ladite paroi courbe.

Grâce à ces caractéristiques, la cheville exerce une force de serrage et d'emboutissage qui maintient le tenon dans la mortaise. La position de l'orifice dépend uniquement de la position et de la forme de la mortaise. L'orifice peut donc être usiné avant de recouvrir les pièces de laque ou de vernis et avant l'insertion du tenon. Ainsi, quand on dispose de la première pièce, de la deuxième pièce et de la cheville, l'assemblage peut être réalisé sans colle ni opération d'usinage complémentaire.

De préférence, ledit orifice présente un rayon inférieur aux courbures principales de ladite paroi courbe au niveau du point d'intersection de l'axe de l'orifice et de la paroi courbe.

Avantageusement, la mortaise présente une forme cylindrique dont la courbe directrice comprend un arc de cercle, ledit orifice présentant un rayon inférieur au rayon dudit arc de cercle.

Selon un mode de réalisation particulier, la première pièce et la deuxième pièce sont en bois et la cheville est en métal ou autres matières rigides.

Selon un mode de réalisation particulier, au moins l'une de la première pièce et de la deuxième pièce est vernie ou laquée ou peinte.

L'invention fournit aussi un meuble comprenant un dispositif selon l'invention ci-dessus.

Il peut s'agir par exemple d'un lit.

### Brève description des figures

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective éclatée d'un dispositif selon un mode de réalisation de l'invention,
- la figure 2 représente une variante du dispositif de la figure 1.

### Description détaillée d'un mode de réalisation de l'invention

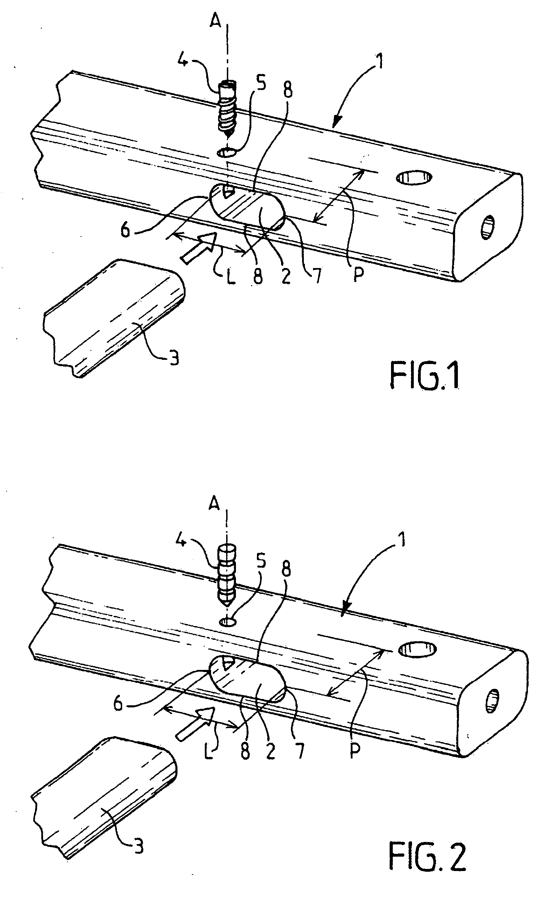

Le dispositif représenté sur la figure 1 comprend une première pièce 1 qui présente une mortaise 2, et une deuxième pièce dont on voit uniquement un tenon 3. La figure 1 est une vue éclatée et dans l'état assemblé, le tenon 3 est inséré dans la mortaise 2. Le dispositif représenté sur la figure 1 est par exemple un détail d'un meuble en bois, par exemple un lit.

La mortaise 2 présente une forme cylindrique. Comme on peut le voir sur la figure 1, la courbe directrice de la mortaise 2 comprend un premier demi-cercle 6, un deuxième demi-cercle 7 et deux segments de droite 8 reliant entre eux les demi-cercles. La mortaise 8 présente donc deux parois courbes correspondant respectivement aux deux demi-cercles.

Le tenon 3 a une forme et des dimensions correspondant à celles de la mortaise 2.

La première pièce 1 présente un orifice 5. L'orifice 5 a une forme de cylindre de révolution d'axe A. Comme on peut le voir sur la figure 1, l'orifice 5 communique avec la mortaise 2 et l'axe A est tangent à la paroi courbe de la mortaise correspondant au demi-cercle 6. L'orifice 5 peut être usiné avant assemblage du dispositif, et avant de vernir ou laquer la première pièce 1.

Le dispositif de la figure 1 comprend également une cheville 4 insérée dans l'orifice 5. La cheville 4 a une forme globalement cylindrique et est coaxiale avec l'orifice 5. Il peut s'agir d'une cheville à visser, comme représenté sur la figure 1, ou d'une cheville à frapper, comme représenté dans la variante de la figure 2 sur laquelle on a utilisé les mêmes numéros de références.

L'assemblage du dispositif est réalisé de la façon suivante. Premièrement, le tenon 3 est inséré dans la mortaise 2. Ensuite, la cheville 4 est insérée dans l'orifice 5, qui a été usiné préalablement. Il n'est pas nécessaire d'usiner un orifice complémentaire ni de coller.

Comme expliqué ci-dessus, la forme du tenon 3 correspond à celle de la mortaise 2 et l'axe A de l'orifice est tangent à une paroi de la mortaise 2. Ceci implique que quand la cheville 4 est insérée dans l'orifice 5, de manière coaxiale, elle exerce une force de serrage et emboutissage sur le tenon 3. L'efficacité de la fixation est assurée par cette force de serrage.

L'efficacité de la fixation est particulièrement bien assurée par la force de serrage quand la cheville 4 est réalisée en un matériau rigide par rapport au tenon 3. Par exemple, la cheville 4 est métallique et le tenon 3 est en bois, ou de manière plus générale la première pièce 1 et la deuxième pièce sont en bois.

L'efficacité de la fixation est aussi particulièrement bien assurée par la force de serrage quand la cheville 4, et donc l'orifice 5, présente un rayon inférieur au rayon de courbure du demi-cercle 6. Par exemple, pour une mortaise 2 dont la profondeur P est de 25 mm ou plus et la largeur L est égale à 25 mm, on peut prévoir un rayon de courbure de 6 mm et une cheville de 5 mm de diamètre, donc de 2,5 mm de rayon.

De manière plus générale, pour une mortaise dont la paroi courbe a une forme quelconque, il est préférable que le rayon de la cheville soit inférieur aux courbures principales de la paroi courbe, au point d'intersection entre l'axe A et la paroi courbe, et de préférence inférieur à la moitié de ces courbures principales.

## Revendications

1. Dispositif comprenant une première pièce (1) présentant une mortaise (2) et une deuxième pièce présentant un tenon (3) de forme correspondante à ladite mortaise et une cheville destinée à maintenir le tenon dans la mortaise, le tenon étant inséré dans ladite mortaise, dans lequel la première pièce présente un orifice (5) en forme de cylindre de révolution qui communique avec ladite mortaise et dans lequel est insérée la cheville (4) coopérant avec ledit tenon, la mortaise présentant au moins une paroi courbe, l'axe (A) dudit orifice étant tangent à ladite paroi courbe et **caractérisé par le fait que** la première pièce et la deuxième pièce sont en bois et la cheville est en métal ou autres matières rigides.

2. Dispositif selon la revendication 1, dans lequel ledit orifice présente un rayon inférieur aux courbures principales de ladite paroi courbe au niveau du point d'intersection de l'axe de l'orifice et de la paroi courbe.

3. Dispositif selon la revendication 2, dans lequel la mortaise présente une forme cylindrique dont la courbe directrice comprend un arc de cercle (6), ledit orifice présentant un rayon inférieur au rayon dudit arc de cercle.

4. Dispositif selon l'une des revendications précédentes, dans lequel au moins l'une de la première pièce et de la deuxième pièce est vernie ou laquée ou peinte.

5. Meuble comprenant un dispositif selon l'une des revendications précédentes.

## Claims

1. A device comprising a first piece (1) having a mortise (2) and a second piece having a tenon (3) with a shape corresponding to said mortise and a pin intended to keep the tenon in the mortise, the tenon being inserted in said mortise, wherein the first piece has an opening (5) in the shape of a cylinder of revolution that communicates with said mortise and wherein the pin (4) is inserted cooperating with said tenon, the mortise having at least one curved wall, the axis (A) of said opening being tangent to said curved wall and **characterized in that** the first piece and the second piece are made from wood and the pin is made from metal or other rigid materials.

2. The device according to claim 1, wherein said opening has a radius smaller than the primary curves of said curved wall at the point of intersection of the axis of the opening and the curved wall.

3. The device according to claim 2, wherein the mortise is in a cylindrical shape whereof the guiding curve comprises an arc of circle (6), said opening having a radius smaller than the radius of said arc of circle.

4. The device according to one of the preceding claims, wherein at least one of the first piece and the second piece is varnished or lacquered or painted.

5. A piece of furniture comprising a device according to one of the preceding claims.

## Patentansprüche

1. Vorrichtung, umfassend ein erstes Stück (1), das ein Loch (2) aufweist, und ein zweites Stück, das einen Zapfen (3) in einer Form aufweist, die dem Loch entspricht, und einen Dübel, der dazu vorgesehen, den Zapfen im Loch zu halten, wobei der Zapfen in das Loch eingeführt ist, wobei das erste Stück eine Öffnung (5) in Form eines Drehzylinders aufweist, der mit dem Loch kommuniziert, und in den der Dübel (4), der mit dem Zapfen zusammenarbeitet, eingeführt ist, wobei das Loch mindestens eine gekrümmte Wand aufweist, wobei die Achse (A) der Öffnung die gekrümmte Wand berührt, und **dadurch gekennzeichnet, dass** das erste Stück und das zweite Stück aus Holz bestehen und der Dübel aus Metall oder anderen starren Materialien besteht.

2. Vorrichtung nach Anspruch 1, wobei die Öffnung einen Radius aufweist, der geringer als die hauptsächlichen Krümmungen der gekrümmten Wand auf der Ebene des Schnittpunktes der Achse der Öffnung mit der gekrümmten Wand ist.

3. Vorrichtung nach Anspruch 2, wobei das Loch eine zylindrische Form aufweist, deren Leitkrümmung einen Kreisbogen (6) umfasst, wobei die Öffnung einen Radius aufweist, der kleiner als der Radius des Kreisbogens ist.

4. Vorrichtung nach einem der vorhergehenden Ansprüche, wobei mindestens eines des ersten Stücks und des zweiten Stücks gefirnisst, lackiert oder gestrichen ist.

5. Möbelstück, umfassend eine Vorrichtung nach einem der vorhergehenden Ansprüche.
